Europäisches Patentamt

European Patent Office

Office européen des brevets

(11) Publication number: **0 107 667**
**B1**

# (12) EUROPEAN PATENT SPECIFICATION

(45) Date of publication of patent specification: **05.10.88**

(51) Int. Cl.⁴: **F 16 H 3/08**

(21) Application number: **83900201.1**

(22) Date of filing: **08.12.82**

(86) International application number:
**PCT/GB82/00346**

(87) International publication number:
**WO 83/02140 23.06.83 Gazette 83/15**

(54) **GEAR TRAINS.**

(30) Priority: **08.12.81 GB 8137014**
**08.12.81 GB 8137012**

(43) Date of publication of application:
**09.05.84 Bulletin 84/19**

(45) Publication of the grant of the patent:
**05.10.88 Bulletin 88/40**

(84) Designated Contracting States:
**AT BE DE FR GB LU NL SE**

(56) References cited:
**DE-A-2 842 943**
**GB-A-2 074 258**
**US-A-2 739 487**
**US-A-2 787 167**
**US-A-3 080 767**
**US-A-3 498 150**

(73) Proprietor: **Windsor-Smith, Claude Peter**
**11 The Drive Woodhouse Eaves**
**Loughborough Leicestershire LE12 8RE (GB)**
(73) Proprietor: **Tailby, Raymond Alfred**
**40 Moat Road**
**Loughborough Leicestershire LE11 3PN (GB)**

(72) Inventor: **Windsor-Smith, Claude Peter**
**11 The Drive Woodhouse Eaves**
**Loughborough Leicestershire LE12 8RE (GB)**
Inventor: **Tailby, Raymond Alfred**
**40 Moat Road**
**Loughborough Leicestershire LE11 3PN (GB)**

(74) Representative: **Archer, Philip Bruce et al**
**Urquhart-Dykes & Lord Trinity Court Trinity**
**Street Priestgate**
**Peterborough Cambridgeshire PE1 1DA (GB)**

Courier Press, Leamington Spa, England.

## Description

This invention relates to constant mesh change speed gear trains and to gearboxes incorporating such gear trains, for providing two or more drive transmission ratios through the gear train. The invention is particularly, but not exclusively, applicable to such gear trains for use in land vehicles, and a particular application of the invention is to gear trains for use in lorries or trucks and other highway vehicles.

The invention also provides a drive transmission incoporating such gear trains, which transmission may be provided with automatic or semi-automatic control systems for effecting ratio changing. Another aspect of the invention provides a vehicle, particularly a land vehicle such as a lorry or truck, incorporating such transmissions and/or gear trains.

In out European patent EP 012,022 B, we have described a gear train comprising a drive input shaft having an associated drive input gear, and a drive output shaft having a corresponding drive output gear, and one or more layshafts each having layshaft input and output gears in direct constant mesh with the input shaft and output shaft gears respectively, and the or each layshaft also having clutch means operable to establish and interrupt the transmission of drive between the input and output shaft gears, the clutch means being located at the end of its layshaft so as to be more accessible.

In out European patent EP 041 320 B we have described modifications to the gear train of our earlier patent, and have disclosed a drive transmission incorporating such modified gear train and provided with manual, semi-automatic or fully automatic control of ratio changing.

The gear trains, gearboxes and drive transmissions of our above-mentioned previous patents possess very significant techical advantages relating principally to simplicity of construction and consequent reduced manufacturing cost, robustness and reliability which lead to long service life, and ease of maintenance which greatly reduce vehicle "down time".

The specific embodiments of our prior patents have related principally to gear trains and transmissions for city buses and similar public service vehicles, whereas in the present application we are concerned more particularly through by no means exclusively, with the provision of gear trains, gearboxes, and transmissions particularly suitable for use in trucks and similar highway vehicles. We emphasise however that the present invention has many other applications.

In the case of city buses and the like, the favourable power to weight ratio of the vehicle is such that there is rarely a requirement for more than four selectable transmission ratios, and in some cases three such ratios and a torque convertor will suffice.

In the case of trucks however, the power to weight ratio is much less favourable and more transmission ratios are required, or at the very least, the ratios must be more widely spaced. In this connection a further factor is that where the engine or prime mover of the truck is turbocharged the torque output characteristics of the engine are modified so that the available torque is reduced at low engine speeds, and thus a vehicle having a turbocharged engine may well require one or two additional transmission ratios for use in moving off from rest and hill climbing.

A consequence of the much higher drive transmission ratios needed for the bottom (low speed) gears of a truck is the correspondingly high torque which is transmitted during use of such ratios. This high torque leads to a requirement for correspondingly large diameter clutches in the case of gear trains incorporating clutch-controlled layshafts. Incorporation of such large clutches leads to serious space considerations when designing a gearbox.

Also, the high transmission ratios needed by a truck for low speed work lead to the problem that, in the case of a constant mesh gear train, when the vehicle is travelling at maximum highway speed in the lowest transmission ratio (ie top gear), the rate of rotation of the gears associated with the highest transmission ratio (ie bottom gear) can be excessive and lead to undue energy losses from oil churning, if not to bearing failure.

In Lee, U.S. 3,064,488 disclosing the features of the precharacterising part of claim 1 of the invention there is disclosed a multilayshaft gear train in which constant mesh gears are arranged to provide a variety of torque paths. Each layshaft consists of a unitary assembly of two layshaft portions rotating as a rigid assembly. Three gears are provided on each layshaft, one at each end, and one in a central connecting section. Torque can pass into each layshaft both at one end and at the central gear. Torque can pass out of each layshaft both at the other end and at the central gear. As a result of this arrangement, the torque paths in which torque increase can be provided in the central region of the gear train are somewhat limited. Of course, no torque increase at all can be provided in the central region of the gear train when the torque path chosen involves transmitting torque from one end of a layshaft to the other. Likewise, even when it is chosen to transmit torque along the first portion of one layshaft and then through the central gears to the second portion of another layshaft, no torque increase is provided in such torque transfer between the layshafts because the constant mesh gears in the connecting central section of the gear train are all of equal diameter. This is because of the dual function of the gears of the connecting section. Each central layshaft gear serves not only as a layshaft input gear but as a layshaft output gear. As a result of this dual function it is not possible to provide for torque increase in both torque transmission directions, and therefore equal diameter gears are chosen. As a result, in the Lee specification, the number of torque increasing mesh points in any chosen transmission ratio (being mesh points between layshaft gears and gears on the central input/output shaft torque transmission assembly) is at most only two. This is a severe limitation so far as concerns a transmission for heavy duty highway vehicles such as trucks where a maximum transmission ratio of about 8:1 may well be needed. To provide such a ratio in only two steps involves excessive disparity in gear diameters and correspondingly large space and torque requirements.

An object of the present invention is to provide a gear train for forward drive highway vehicles providing improvements in relation to matters discussed above. It is noted that the significance of applying to this gear train the design parameter that it is for forward drive road vehicles is that this imposes strict size and cost requirements to meet the demands of this mass market, whereby a simple direct meshing assembly of layshaft and central input/output shaft gears becomes a requirement.

According to the invention there is provided a multilayshaft constant mesh change speed forward drive gear train for highway vehicles as defined in the accompanying claims. The invention also provides a drive transmissison incorporating such gear train and a highway vehicle incorporating such transmission.

Embodiments of the invention will now be described by way of example with reference to the accompanying drawings in which:

Fig. 1 shows a diagrammatic plan view from below of a truck and its transmission;

Fig. 2 shows a diagrammatic representation of a gear train and an associated drive input coupling of the transmission of Fig. 1;

Fig. 3 shows a longitudinal section through the gear train of Fig. 2;

Fig. 4 shows an end view of the gearbox containing the gear train of Fig. 3, the direction of viewing being indicated by arrows IV in Figs. 1 and 3;

Fig. 5 shows a section, on the lines V—V in Fig. 4 through two ratio-selecting clutches mounted at the ends of respective layshafts in the gear train;

Fig. 6 shows a sectional view, similar to that of Fig. 5, but omitting the clutch actuation cylinder structure, showing a modified clutch assembly in which there is provision for a fixed rate of oil flow to the clutch plates;

Fig. 7 shows an end view of the clutch of Fig. 5, the direction of viewing being indicated by arrow VII in Fig. 5.

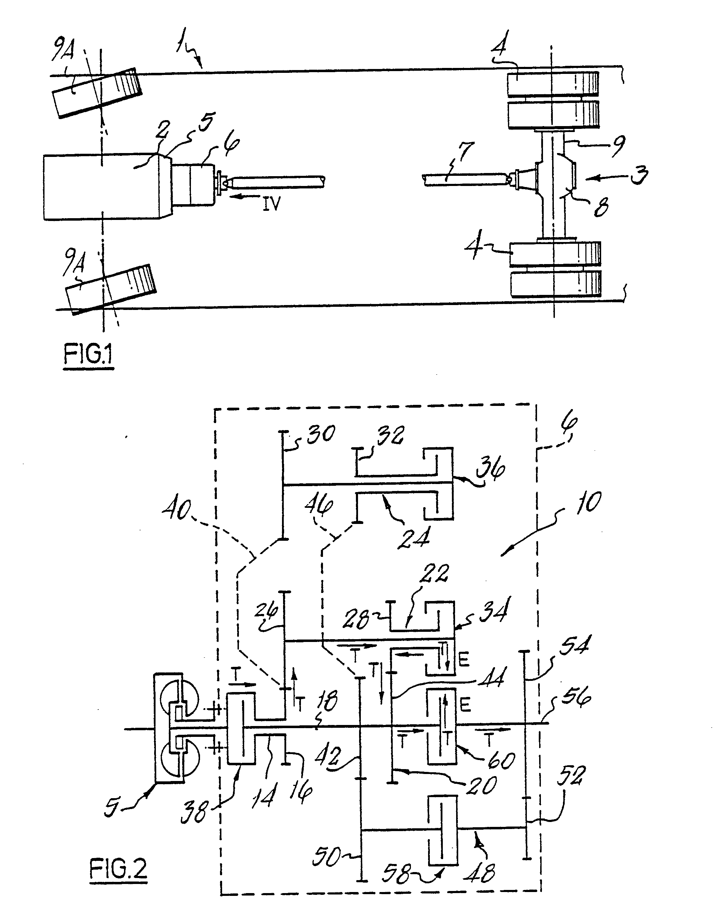

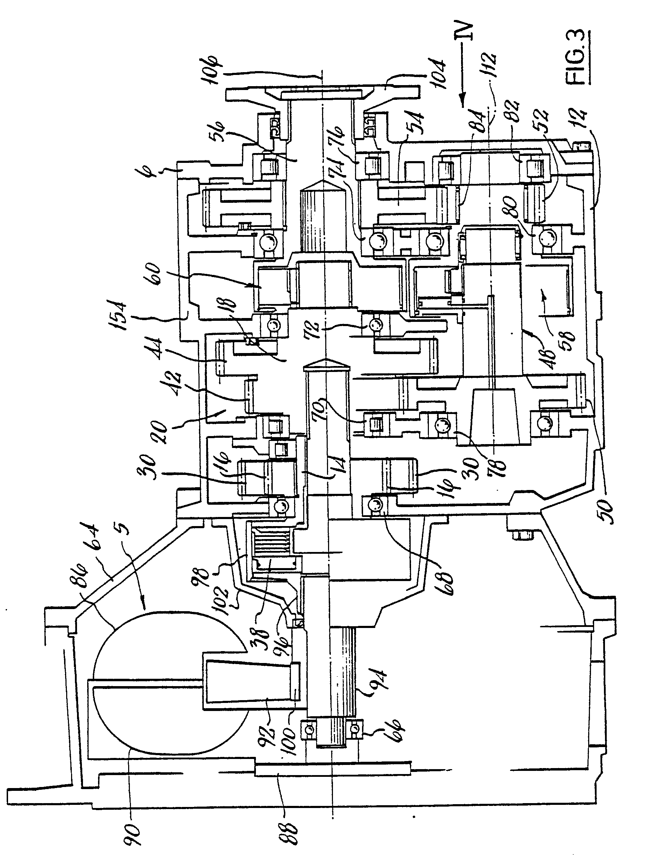

As shown in Fig. 1, a highway vehicle in the form of a truck 1 has a front-mounted turbocharged internal combustion engine 2 and a drive transmission 3 connecting the engine to rear wheels 4. The transmission comprises a hydraulic coupling device 5, a gearbox 6, a propellor shaft 7 having universal joints at each end and connected to a differential drive unit 8 and hence to the back axle 9. The direction of forward motion of the vehicle is indicated by arrow F and the steerable front wheels are designated by reference 9A.

Referring to Fig. 2 of the drawings, gearbox 6 contains a gear train 10 which is shown diagrammatically in Fig. 2. The gear train comprises an input shaft 14 having an input shaft gear 16, and an output shaft 18 having an output shaft gear 20. Input gear 16 is connected to tubular input shaft 14 so as to be rotatable therewith at all times.

Gear train 10 further comprises first and second layshafts 22 and 24 respectively, the layshafts each having layshaft input and output gear 26, 28 and 30, 32 respectively together with clutch means 34, 36 at one end of the layshafts and operable to establish and interrupt the transmission of drive between the layshaft input and output gears. The layshafts 22 and 24 each comprise a co-axial assembly of a tubular outer shaft 37 and a central inner shaft 39.

Input shaft gear 16 is drivably connected to coupling device 5 through a clutch 38 which provides a direct drive top gear. Clutch 38 comprises an assembly of interleaved friction elements or clutch plates. All clutches of gearbox 6 comprise such plates, though it would be possible to substitute an alternative type of clutch means. Input shaft gear 16 is connected through input shaft 14 and the casing of clutch 38 to coupling device 5 soas to receive drive therefrom. One of the sets of interleaved clutch plates of clutch 38 is splined to output shaft 18, so that when the clutch plates are driveably engaged, drive is transmitted direct from input shaft 14 to output shaft 18, thereby providing a direct top gear with a transmission ratio of 1 to 1 between gears 16 and 20.

The layshaft input gears 26 and 30 are both in direct constant meshing engagement with input shaft gear 16, as indicated by broken line 40.

Output shaft gear 20 comprises gears 42 and 44 rigidly mounted on output shaft 18 in close proximity to each other and meshing, respectively, with the primary layshaft output gears 32 and 28, as indicated by broken line 46.

It will be appreciated that the meshing engagement of input shaft gear 16 with the layshaft input gears 26 and 30 provides, for each layshaft, a first stage of torque increase or speed change due to the size differences between these gears. Likewise, the meshing engagement of output shaft gear 20 with the layshaft output gears 28 and 32 provides a second stage of torque increase or speed change. Thus, both the input and output gears of the primary layshafts constitute change speed gears.

In addition to the first and second layshafts 22, 24, there is provided in gear train 10 a third layshaft 48 having layshaft input and output gears 50 and 52 respectively which are arranged to mesh with first and second gears one of which is drivably coupled to output shaft gear 20. It would be possible to arrange layshaft 48 so that its layshaft gears mesh with first and second gears one of which is drivably coupled to the input shaft gear 16.

In this embodiment, the first gear with which the gears of layshaft 48 mesh is constituted by output shaft gear 42 and the second such gear is constituted by a relatively large diameter final output gear 54 provided on a drive output portion 56 of output shaft 18. Thus, third layshaft input gear 50 meshes directly with output shaft gear 42 and third layshaft output gear 52 meshes directly with final output-gear 54. A clutch 58 of the interleaved plate kind is provided on third layshaft 48 and is operable to establish and interrupt the transmission of drive through the layshaft between its input and output gears 50 and 52. Clutch 58 is arranged with its housing and the corresponding set of clutch plates fast with the layshaft output gear 52 which meshes with final output gear 54.

Between output gears 20 and 54, there is provided in the output portion 56 of output shaft 18, a clutch 60 of the interleaved plate kind which is operable to establish and interrupt the direct transmission of drive between these gears. The housing of clutch 60 and the set of clutch plates which are keyed thereto at their outer peripheries are fast with the output portion 56 of output shaft 18.

In use, gear train 10 provides six different transmission ratios between input shaft 14 and the output portion 56 of output shaft 18.

Fig. 2 indicates the torque path for one of these transmission ratios in which layshaft clutch 34 and the clutch 60 are both engaged (as indicated by the letters E in Fig. 2). The torque path is identified by arrows T. This torque path is similar to that in the embodiments described in our prior European patents.

A second transmission ratio is provided by engaging clutch 36 instead of clutch 34. Each of these two ratios may be changed by engaging layshaft clutch 58 and disengaging clutch 60, thus doubling the number of ratios to four. In addition, there is the straight-through top gear ratio provided by engagement of clutches 38 and 60 and this ratio may be modified by disengaging clutch 60 and engaging clutch 58, making a total of six transmission ratios.

It will be noted that in all of the above-described transmission modes two clutches are engaged. In practice, it can be arranged that the change from one ratio to the next is such that one clutch is used in both of these ratios and therefore it is only necessary to change over between the other two clutches to effect the necessary ratio change. The control of the clutches is effected by progressive disengagement of one and progressive engagement of the other, the whole operation being effected in about 1.5 secs.

For use in trucks, the clutches of the gear train are preferably hydraulically actuated rather than pneumatically, so as to achieve the necessary torque-carrying capacity in a minimum of space and to achieve fine control of clutch engagement. The clutches may be connected to a control system providing manual or semi-automatic or fully automatic control of ratio changes. Where automatic or semi-automatic control is provided a monitoring device (not shown) is connected to the transmission, preferably within gear train 10, to monitor rates of rotation of the relevant parts of the gear train. Other devices monitor throttle setting and brake actuation to provide co-ordinated control of ratio changing.

In addition, the gear train may be employed to provide a retarder or transmission brake. This is effected by causing at least one of the clutches not employed for drive transmission purposes at any given time to be partially engaged, whereby retardation is effected. In practice, preferably only clutches 34 and 36 are partially engaged in this manner to effect retardation.

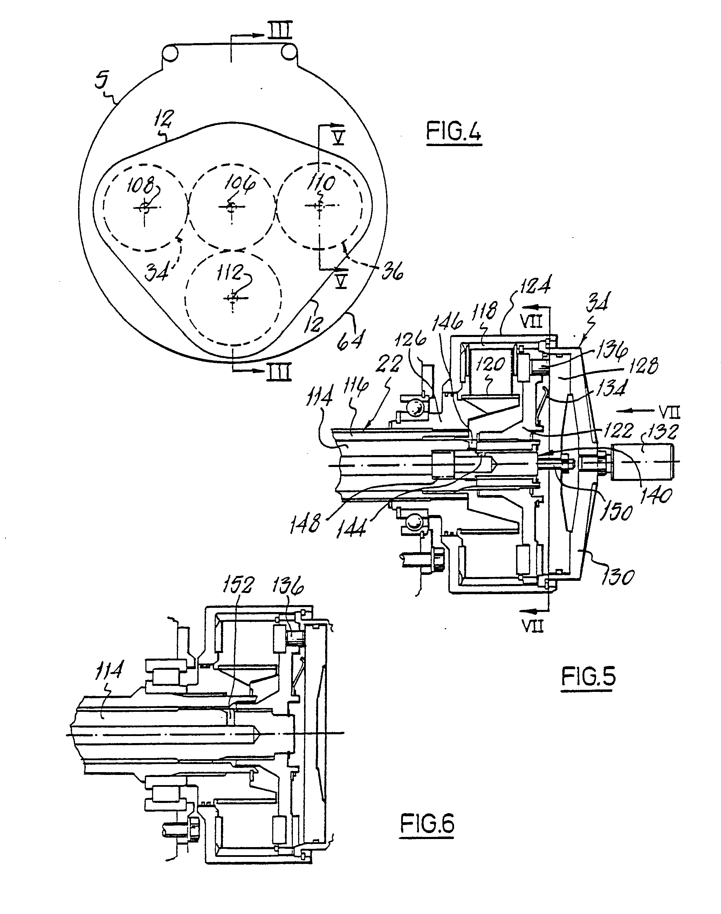

Figs. 3 and 4 show a practical embodiment of the gear train of Figs. 1 and 2. In Figs. 3 and 4, parts corresponding to those of Figs. 1 and 2 are identified by the same reference numerals as in those figures, and no further reference to these parts nor to their function is believed to be necessary, except as follows.

In Figs. 3 and 4, the drive input to gearbox 6 is through coupling device 5 which is provided in a housing 64 attached to gearbox 6. In Fig. 3, coupling 5 and its connections to the gear train and to prime mover 2 are shown only diagrammatically.

Fig. 3 shows the bearings 66, 68, 70, 72, 74 and 76 for the co-axial shaft assembly comprising input shaft 14 and input shaft gear 16, output shaft 18 and output shaft gear 20, and final output gear 54. Likewise, the bearings for layshaft 48 and its input and output gears 50, 52 are identified as 78, 80 and 82.

Also shown in Fig. 3 is a free wheel mounting 84 whereby layshaft output gear 52 is mounted on layshaft 48 so that transmission of torque back to the layshaft when the vehicle is operating at high speed is averted and rotation of the housing of clutch 58 at above engine speed is avoided.

Drive coupling 5 is shown only partially and diagrammatically in Fig. 3. It is to be understood that the coupling is structurally generally similar in form to that of a conventional fluid coupling, comprising a drive input member 86 connected to a drive input connection 88 which is coupled to the flywheel (not shown) of engine 2. Drive input member 86 has blades for engagement with a drive transmission fluid which fills the drive coupling, and a drive output member 90 has corresponding blades to receive drive from the drive input member through the fluid. A reactor member 92 of annular form and having blades 30 to co-operate with the same fluid, is provided between the drive input and output members.

Drive input member 86 and drive output member 90 and their blades are similar in form to the corresponding parts of a conventional fluid coupling. Drive output member 90 is secured to a stub shaft 94 to which is keyed a sleeve 96 secured to housing 98 of clutch 38, so that drive is thus transmitted from the coupling drive input member 86 through stub shaft 94 and clutch housing 98 to input shaft 14.

Reactor member 92 is annular in form and carries fluid reactor blades which extend outwardly between the inner ends of the blades of the drive input and output members 86 and 90.

The reactor member 92 is mounted through a one-way ratchet or freewheel mounting 100 on a non-rotatable structure 102 so as to be rotatable in the drive direction and non-rotatable in the opposite direction.

The attitudes, lengths and profiles of the blades of the reactor member are such that coupling 5 provides torque multiplication in the range from 1.5 to 2.2, the preferred narrower ranges being 1.6 to 2.0 and 1.7 to 1.9, at stall between the drive input and drive output members.

An output drive flange 104 is provided to couple portion 56 of output shaft 18 to propellor shaft 7.

As shown in Fig. 4, gearbox 6 has a somewhat triangular profile to accommodate the main shafts of the gearbox (input/output shafts 14/18, layshafts 22, 24 and layshaft 48), which are identified by their respective axes 106, 108, 110 and 112. The compact form of this six ratio gearbox is readily apparent.

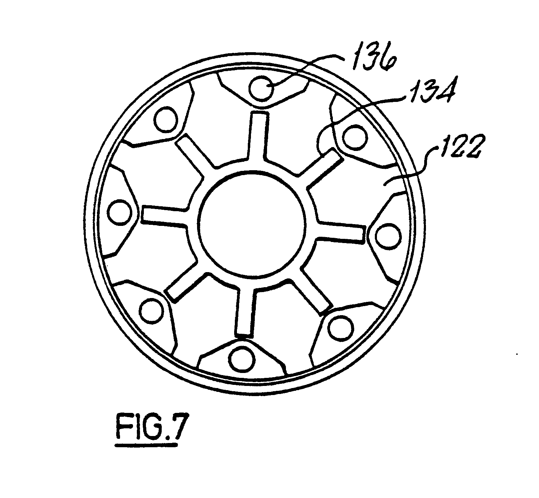

Figs. 5, 6 and 7 show details of the structure of the clutches 34, 36 of layshafts 22 and 24. Each of these layshafts comprises an inner shaft portion 114 extending through an outer tubular shaft portion 116 with the layshaft input and output gears mounted respectively on the inner and outer shaft portions.

Clutches 34 and 36 each comprise first and second assemblies of interleaved clutch elements having drive connection means 118, 120 at their outer and inner peripheries respecively, such connection means being the usual dogs and grooves arrangement.

Inner shaft portion 114 (which transmits drive to the clutch assembly) is keyed to a hub 122 and hence secured to clutch housing 124 and thus through drive connection 118 to one set of clutch elements,

Likewise, outer shaft portion 116 (which transmits drive from the clutch assembly) is keyed to a hub 126 and hence through drive connection means 120 to the other set of clutch elements.

In other words, inner shaft portion 114 is connected through clutch housing 124 and the outer drive connection means 118 to one set of clutch elements and outer shaft portion 116 is connected to the other set of clutch elements. As a result, when the primary layshaft output gears 28 and 32 rotate at above engine speed during high speed operation of the vehicle, the clutch housings 34 and 36 do not themselves rotate at above engine speed and this improves the operating characteristics of the gear train.

Fig. 5 also shows the actuating piston 128, its cylinder 130 and the pneumatic supply connection 132 whereby clutch 34 is actuated. A leaf type return spring 134 acts between hub 122 and piston 128. Actuating thrust is transmitted through hub 122 by means of eight thrust rods 136 which are slidably mounted in eight equally circumferentially spaced openings in hub 122.

A duct 138 to supply cooling fluid to clutch 34 extends lengthwise of layshaft 22 and a flow control valve 140 is provided adjacent the clutch to control the supply of fluid thereto. The control valve comprise a slidable valve member 142 formed with a port 144 which is alignable with a corresponding port 146 formed in inner layshaft portion 114. A return spring 148 biases valve member 142 to the position shown in Fig. 5. Upon actuation of clutch 34 a plunger 150 on piston 128 slides valve member 142 from its shown position, in which a limited or bleed supply of fluid is delivered to the clutch elements, to a fully open position in which a large supply of fluid is delivered to the clutch elements to effect cooling thereof during retardation.

In the clutch shown in Fig. 6, no valve member 142 is provided, but the layshaft inner portion 114 is provided with a fixed port 152 to deliver a fixed bleed supply of fluid to the clutch elements. This latter arrangement may be employed where use of the clutch from retardation purposes is not required.

Among the advantages provided by the above-described embodiment are the retention of the main advantages of the gear train system as disclosed in our prior patents, while extending the application of the gear train so as to meet the requirements of truck and related operations by providing a relatively large number of transmission ratios which can be widely spaced. Moreover, the coupling 15 provides the fuel efficiency of a conventional fluid coupling at normal road speeds while providing a modest degree of torque multiplication for drive take-up and hill climbing purposes, and this without the need for oil coolers and associated pumps.

A further advantage arises from the presence of the third layshaft and the extra two meshing points which it provides, whereby in the highest transmission ratios provided (bottom gears and maximum torque increase between engine and ground wheels) the maximum torque is transmitted only through the output portion of the gear train and most of the torque-transmitting components of the gearbox are operating at a substantially lower torque. Thus, the provision of extra mesh points in the gear train, though achieved without increasing the overall size of the gearbox, results in lower torque-carrying requirements for the clutches and the dimensions of these can be correspondingly reduced. This reduces the overall space requirements of the gearbox.

Among modifications which could be made in the above embodiment without departing from the scope of the invention are the following:

1. The use of only one of the layshafts 22, 24 or 3 or more such layshafts. Even with only one such layshaft, four transmission ratios are obtainable.

2. The provision of the layshaft clutch 58 in the form of an end clutch, which is more accessible for servicing than an internal clutch.

3. Arrangement of the layshaft 48 so as to divide the torque path at the input end of the gearbox instead of at the output end.

4. Modifications to the drive input arrangements for the gearbox, including the use of the layshaft clutches 34, 36 to take up the drive from rest, instead of the coupling 5. The provision of a torsionally-damped mechanical coupling for drive input purposes is desirable in this situation, together with hydraulic control of the layshaft clutch engagement rate.

5. Layshaft clutch 58 may be omitted whereby ratchet or freewheel device 84 provides the function of the clutch. When clutch 60 is disengaged, torque is transmitted down to the layshaft and through the freewheel mounting 84 and hence to output shaft portion 56. When clutch 60 is engaged, the rate of rotation of gear 54 is such that layshaft output gear 52 freewheels and transmits no torque. It will be understood that with this arrangement no engine braking is provided in the ratios concerned (usually bottom gears ie. highest transmission ratios), and no neutral transmission condition is available for these ratios, which has safety implications for engine start-up. The extpression "clutch means" in this specification is to be interpreted as covering the use of a freewheel or ratchet mounting in place of the plate type clutches disclosed.

6. The substitution of a freewheel or ratchet mounting for other clutches in the gear train, where appropriate.

7. The use of a single gear on the output shaft in place of the double gear cluster 42, 44.

8. Modification of the gear casing to improve access to the layshaft clutches 34, 36. These clutches are located within the outer portion 154 of the gearbox, and the latter portion thus constitutes cover means providing access to these clutches and can be readily removed in one piece or in a few sections.

**Claims**

1. A multi-layshaft constant mesh change speed forward drive gear train (10) for highway vehicles, of the kind comprising at least two layshafts (22, 24, 48) each having layshaft input gear means (26, 30, 50) layshaft output gear means (28, 32, 52), and an independently controllable layshaft forward drive clutch means (34, 36, 58) located within a casing (6) of the gear train, and said clutch means including liquid cooled friction elements, the clutch means being operable to establish and interrupt the transmission of drive through the layshafts between said layshaft input and output gears, said gear train further comprising a change speed gear assembly (16, 42, 44, 54), and the layshaft gears being in direct constant mesh with said change speed gear assembly, said change speed gear assembly comprising at least first (16), second (42, 44) and third (54) independently rotatable coaxial change speed gear means having direct drive clutch means (38, 60) therebetween and each providing speed change with respect to its constant meshing engagement with said layshaft gear means, said first, second and third change speed gear means providing first (16, 42, 44) and second (42, 44; 54) pairs of change speed gears comprising said first (16) and second (42, 44) and said second (42, 44) and third (54) gear means respectively; and said layshafts each having their own layshaft input and output gears in direct constant mesh with said pairs of change speed gears, said first pair of change speed gears (16; 42, 44) being in direct constant mesh with the input (26) and output (28, 32) gears of one layshaft (22, 24) and the second pair of change speed gears (42, 44; 54) being in direct constant mesh with the input (50) and output (52) gears of the other layshaft (48) characterized in that, said output gear means (28, 32) on a first one (22, 24) of said layshafts meshes with said second gear means (42, 44) of said change speed gear assembly and constitutes the sole torque output from said layshaft to said change speed gear means, and said input gear means (50) on a second one (48) of said layshafts meshes with said second gear means (42) of said change speed gear assembly and constitutes the sole torque input from said change speed gear assembly to said second layshaft, whereby the arrangement is such that said torque output from said first layshaft (22, 24) to said change speed gear assembly (16, 42, 44, 54) and said torque input from said change speed gear assembly to said second layshaft (48) can each provide for torque increase for a low transmission ratio of said gear train.

2. A gear train according to claim 1 characterised in that two (34, 36) of said forward drive clutch means (34, 36, 58) are located at the same end of the gear train.

3. A gear train according to claim 1 or claim 2 characterised in that said layshaft input (26, 30, 50) and output (28, 32, 52) gears of each of said layshafts (22, 24, 48) are mounted respectively on inner and outer shaft portions of said layshafts, and said forward drive clutch means (34, 36, 58) comprise first and second assemblies of interleaved clutch elements having drive connection means at their outer and inner peripheries respectively, and said first assembly of clutch elements is directly connected to the layshaft inner shaft portion and hence to the layshaft input gear.

4. A gear train according to any preceding claim characterised in that drive input (14) and drive output (56) shafts for the gear train extend through the casing (6), said drive input and drive output shafts being arranged coaxially with said change speed gear assembly (16, 42, 44, 54).

5. A gear train according to claim 4 when dependent upon claim 2 characterised in that said forward drive clutch means (34, 36, 58) are located at or in the region of the end of said gear casing (6) remote from said drive input shaft (14).

6. A gear train according to any preceding claim characterised by a third layshaft (24) having layshaft input (30) and output (32) gears in direct constant mesh with said first pair of change speed gears (16, 42) whereby at least six drive paths through the change speed gear assembly are available providing at least six different transmission ratios.

7. A drive transmission comprising a gear train according to any preceding claim characterised by a torsionally damped mechanical drive input coupling to transmit drive to the gear train, said forward drive (34, 36, 58) clutch means being multi-plate interleaved clutch assemblies, and the arrangement being such that drive take-up from rest is provided by progressive engagement of one of said clutch means, and automatic or semi-automatic control means being provided to effect changes of transmission ratio by actuation of said clutch means in accordance with monitored operational parameters of the gear train (10) or transmission or of a vehicle (1) driven thereby.

8. A drive transmission according to claim 7 characterised in that said control means for said forward drive clutch means (34, 36, 58) is operable to effect partial engagement of at least one of said clutch means in addition to the clutch means engaged for drive transmission purposes at a given time whereby retardation of the gear train is effected.

9. A highway vehicle comprising a drive transmission (3) characterised in that the drive transmission comprises a gear train (10) according to any one of claims 1 to 6.

10. A highway vehicle characterised by a drive transmission according to claim 7 or claim 8.

**Patentansprüche**

1. Zahnrad-Schaltgetriebe mit ständigem Eingriff für Frontlenkung, sogenanntes "forward drive", sowie mehreren Vorgelegewellen für Straßenfahrzeuge der Bauart mit wenigstens zwei Vorgelegewellen (22; 24; 48), je mit Vorgelegewellen-Eingangszahnradeinrichtungen (26, 30, 50), Vorgelegewellen-Ausgangszahnradeinrichtungen (28, 32, 52) und einer unabhängig regelbaren Vorgelegewellen-Frontlenkerkupplungsausbindung (34, 36, 58) versehen, die innerhalb eines Gehäuses (6) des Zahnradgetriebes angeordnet ist une wobei diese Kupplungseinrichtung flüssigkeitsgekühlte Reibelemente umfaßt und die Kupplungseinrichtung betätigbar ist, um die Antriebsübertragung durch diese Vorgelegewellen zwischen den Vorgelege-Eingangs- und Ausgangs-Zahnrädern herzustellen und zu unterbrechen, wobei das Zahnradgetriebe weiterhin eine Schaltgetriebeanordnung (16, 42, 44, 54) umfaßt und die Vorgelegewellen-Zahnräder in direktem ständigem Eingriff mit dieser Zahnradschaltgetriebe-Anordnung stehen, wobei diese Zahnradschaltgetriebe-Anordnung wenigstens erste (16), zweite (42, 44) und dritte (54) unabhängig drehbare koaxiale Schaltgetriebe-Zahnradeinrichtungen mit Direkt-Antrieskupplungseinrichtungen (38, 60) hierzwischen umfaßt und je für Gangwechsel bezüglich des ständigen Zahnradeingriffs mit den Vorgelege-Zahnradeinrichtungen sorgt, wobei diese ersten, zweiten und dritten Schaltgetriebe-Zahnradeinrichtungen erste (16, 42, 44) und zweite (42, 44, 54) Paare von Schaltgetriebezahnrädern je mit diesen ersten (16) und zweiten (42, 44) und diesen zweiten (42, 44) und dritten (54) Zahnradeinrichtungen jeweils aufweist; und wobei diese Vorgelegewellen jeweils ihre eigenen Vorgelegewellen-Eingangs- und Ausgangs-Zahnräder in direktem konstantem Eingriff mit diesen Paaren von Schaltgetriebe-Zahnrädern haben, wobei dieses erste Paar von Schaltgetriebe-Zahnrädern (16, 42, 44) in direktem konstantem Eingriff mit den Eingangs- (26) und Ausgangs-Zahnrädern (28, 32) einer der Vorgelegewellen (22, 24) und dieses zweite Paar von Schaltgetriebe-Zahnrädern (42, 44, 54) in konstantem ständigem Eingriff mit den Eingangs- (50) und Ausgangs-Zahnrädern (52) der anderen Vorgelegewelle (48) steht, dadurch gekennzeichnet, daß diese Ausgangs-Zahnradeinrichtung (28, 32) auf einer ersten (22, 24) dieser Vorgelegewellen mit dieser zweiten Zahnradeinrichtung (42, 44) der Schaltgetriebe-Zahnradanordnung kämmt und den einzigen Drehmomentenausgang von dieser Vorgelegewelle auf diese Schaltgetriebe-Zahnradeinrichtung bildet und diese Eingangs-Zahnradeinrichtung (50) auf einer zweiten (48) dieser Vorgelegewellen mit dieser zweiten Zahnradeinrichtung (42) dieser Schaltgetriebeanordnung kämmt und den einzigen Drehmomenteneingang von dieser Schaltgetriebe-Zahnradanordnung auf diese zweite Vorgelegewelle bildet, wodurch die Anordnung derart ist, daß dieser Drehmomentenausgang von dieser ersten Vorgelegewelle (22, 24) auf diese Schaltgetriebe-Zahnradanordnung (16, 42, 44, 54) und dieser Drehmomenteneingang von dieser Schaltgetriebe-Zahnradanordnung auf diese Vorgelegewelle (48) je für Drehmomentenanstieg für ein niedriges Übersetzungsverhältnis dieses Zahnradgetriebes sorgen können.

2. Zahnradgetriebe nach Anspruch 1, dadurch gekennzeichnet, daß zwei (34, 36) dieser Frontlenker, sogenanntes "forward drive", bzw. Vorwärtsantriebskupplungs-Einrichtungen (34, 36, 58) am gleichen Ende des Zahnradgetriebes angeordnet sind.

3. Zahnradgetriebe nach Anspruch 1 oder 2, dadurch gekennzeichnet, daß diese Vorgelegewelle Eingangs- (26, 30, 50) und Ausgangszahnräder (28, 32, 52) jeder dieser Vorgelegewellen (22, 24, 48) je auf inneren und äusseren Wellenteilen dieser Vorgelegewellen gelagert sind und diese Frontlenker- oder Vorwärtsantriebskupplungs-Einrichtungen (34, 36, 58) erste und zweite Anordnungen von Lamellen-Kupplungselementen mit Antriebsverbindungseinrichtungen an ihren äusseren und inneren Umfängen jeweils aufweisen und daß diese erste Anordnung von Kupplungselementen direkt mit dem Innenwellenteil der Vorgelegewelle und damit mit dem Vorgelegeeingangszahnrad verbunden ist.

4. Zahnradgetriebe nach einem der vorhergehenden Ansprüche, dadurch gekennzeichnet, daß die Antriebseingangs- (14) un Antriebsausgangswellen (56) für das Zahnradgetriebe durch das Gehäuse (6) hindurch reichen, wobei die Antriebseingangs- und Antriebsausgangswellen koaxial zur Schaltgetriebeanordnung (16, 42, 44, 54) angeordnet sind.

5. Zahnradgetriebe nach Anspruch 4, abhängig

## 13 — 0 107 667 — 14

von Anspruch 2, dadurch gekennzeichnet, daß diese Frontlenker- oder Vorwärtsantriebskupplungseinrichtungen (34, 36, 58) an oder im Bereich des Endes dieses Getriebegehäuses (6) entfernt von dieser Antriebseingangswelle (14) angeordnet sind.

6. Zahnradgetriebe nach einem der vorhergehenden Ansprüche, gekennzeichnet durch eine dritte Vorgelegewelle (24) mit Vorgelegeeingangs- (30) und Ausgangs-Zahnräder (32) in direktem ständigem Eingriff mit diesem ersten Paar von Schaltgetriebezahnrädern (16, 42), wodurch wenigstens sechs Antriebswege durch die Schaltgetriebe-Zahnradanordnung verfügbar sind und wenigstens sechs unterschiedliche Übersetzungsverhältnisse liefern.

7. Antriebstransmission mit einem Zahnradgetriebe nach einem der vorhergehenden Ansprüche, gekennzeichnet durch eine torsionsgedämpfte mechanische Antriebseingangskupplung zur Antriebsübertragung auf das Zahngetriebe, wobei diese Vorwärtsantriebskupplung bzw. Frontlenkerkupplung (34, 36, 58) Lamellenkupplungsanordnungen sind und die Anordnung derart getroffen ist, daß die Antriebsaufnahme aus dem Ruhezustand durch progressiven Eingriff einer dieser Kupplungseinrichtungen geliefert wird und automatische oder halbautomatische Regeleinrichtungen vorgesehen sind, um Wechsel im Transmissionsverhältnis durch Betätigung dieser Kupplungseinrichtungen entsprechend mit überwachten Arbeitsparametern des Zahnradgetriebes (1) oder der Transmission oder eines hierdurch getriebenen Fahrzeugs (1) vorzunehmen.

8. Antriebstransmission nach Anspruch 7, dadurch gekennzeichnet, daß diese Regeleinrichtung für diese Frontlenker oder Vorwärtsantriebskupplungseinrichtungen (34, 36, 58) betätigbar ist, um einen Teileingriff wenigstens einer dieser Kupplungseinrichtungen zusätzlich zum Eingriff der Kupplungseinrichtung für Antriebstransmissionszwecke zu einem gegebenen Zeitpunkt vorzunehmen, wodurch eine Verzögerung des Zahnradgetriebes herbeigeführt wird.

9. Straßenfahrzeug mit einer Antriebstransmission (3), dadurch gekennzeichnet, daß die Antriebstransmission ein Zahnradgetriebe (10) nach einem der Ansprüche 1 bis 6 aufweist.

10. Straßenfahrzeug gekennzeichnet durch eine Antriebstransmission nach Anspruch 7 oder Anspruch 8.

**Revendications**

1. Train d'engrenages (10) de marche avant à changement de vitesse en prise constante et à arbres parallèles multiples pour véhicules routiers, du type qui comprend au moins deux arbres intermédiaires (22, 24, 48) comportant chacun des pignons d'entrée d'arbre intermédiaire (26, 30, 50), des pignons de sortie d'arbre intermédiaire (28, 32, 52) et des moyens d'embrayage de marche avant d'arbre intermédiaire commandés de façon indépendante (34, 36, 58) placés à l'intérieur d'un carter (6) du train d'engrenages, et lesdits moyens d'embrayage comprenant des éléments de friction refroidis par liquide, les moyens d'embrayage étant actionnables de manière à établir et interrompre la transmission d'entraînement par les arbres intermédiaires entre lesdits pignons d'entrée et de sortie d'arbre intermédiaire, ledit train d'engrenages comprenant en outre un ensemble de pignons de changement de vitesse (16, 42, 44, 54) et les pignons d'arbre intermédiaire étant en engrènement constant direct avec ledit ensemble de pignons de changement de vitesse, ledit ensemble de pignons de changement de vitesse comprenant au moins des premier (16), deuxième (42, 44) et troisième (54) pignons de changement de vitesse, coaxiaux et à rotation indépendante, entre lesquels sont placés des moyens d'embrayage d'entraînement direct (38, 60) et procurant chacun un changement de vitesse en fonction de leur engrènement constant avec lesdits pignons d'arbre intermédiaire, lesdits premier, deuxième et troisième pignons de changement de vitesse formant une première (16; 42, 44) et une deuxième (42, 44; 54) paires de pignons de changement de vitesse comprenant lesdits premier (16) et deuxième (42, 44) et lesdits deuxième (42, 44) et troisième (54) pignons respectivement; et lesdits arbres intermédiaires ayant chacun leurs propres pignons d'entrée et de sortie d'arbre intermédiaire en engrènement constant direct avec lesdites paires de pignons de changement de vitesse, ladite première paire de pignons de changement de vitesse (16; 42, 44) étant en engrènement constant direct avec les pignons d'entrée (26) et de sortie (28, 32) d'un arbre intermédiaire (22, 24) et la deuxième paire de pignons de changement de vitesse (42, 44; 54) étant en engrènement constant direct avec les pignons d'entrée (50) et de sortie (52) de l'autre arbre intermédiaire (48), caractérisé en ce que lesdits pignons de sortie (28, 32) sur un premier (22, 24) desdits arbres intermédiaires engrènent avec lesdits deuxièmes pignons (42, 44) dudit ensemble de pignons de changement de vitesse et constituent la seule sortie de couple dudit arbre intermédiaire vers lesdits pignons de changement de vitesse, et ledit pignon d'entrée (50) sur un deuxième (48) desdits arbres intermédiaires engrène avec ledit deuxième pignon (42) dudit ensemble de pignons de changement de vitesse et constitue la seule entrée de couple dudit ensemble de pignons de changement de vitesse vers ledit deuxième arbre intermédiaire, l'agencement étant tel que ladite sortie de couple du premier arbre intermédiaire (22, 24) vers ledit ensemble de pignons de changement de vitesse (16, 42, 44, 54) et ladite entrée de couple dudit ensemble de pignons de changement de vitesse vers ledit deuxième arbre intermédiaire (48) peuvent chacune pourvoir à une augmentation de couple pour un bas rapport de transmission dudit train d'engrenages.

2. Train d'engrenages suivant la revendication 1, caractérisé en ce que deux (34, 36) desdits moyens d'embrayage de marche avant (34, 36, 58) sont placés à la même extrémité du train d'engrenages.

3. Train d'engrenages suivant la revendication 1 ou la revendication 2, caractérisé en ce que lesdits pignons d'entrée (26, 30, 50) et de sortie (28, 32, 52) d'arbre intermédiaire de chacun desdits arbres intermédiaires (22, 24, 48) sont montés respectivement sur des parties d'arbre intérieure et extérieure desdits arbres intermédiaires, et lesdits moyens d'embrayage de marche avant (34, 36, 58) comprenant un premier et un deuxième ensembles d'éléments d'embrayage imbriqués comportant des moyens de liaison d'entraînement à leurs périphéries extérieure et intérieure respectivement, et ledit premier ensemble d'éléments d'embrayage est directement relié à la partie d'arbre intérieure d'arbre intermédiaire et, par suite, au pignon d'entrée d'arbre intermédiaire.

4. Train d'engrenages suivant l'une quelconque des revendications précédentes, caractérisé en ce que les arbres d'entrée d'entraînement (14) et de sortie d'entraînement (56) pour le train d'engrenages traversent le carter (6), lesdits arbres d'entrée d'entraînement et de sortie d'entraînement étant disposés coaxialement audit ensemble de pignons de changement de vitesse (16, 42, 44, 54).

5. Train d'engrenages suivant la revendication 4, lorsqu'elle dépend de la revendication 2, caractérisé en ce que lesdits moyens d'embrayage de marche avant (34, 36, 58) sont situés à l'extrémité ou dans la région de l'extrémité dudit carter d'engrenages (6) opposée audit arbre d'antrée d'entraînement (14).

6. Train d'engrenages suivant l'une quelconque des revendications précédentes, caractérisé par un troisième arbre intermédiaire (24) comportant des pignons d'entrée (30) et de sortie (32) d'arbre intermédiaire en engrènement constant direct avec ladite première paire de pignons de changement de vitesse (16, 42), de sorte qu'il existe au moins six chemins d'engrènement par l'intermédiaire de l'ensemble de pignons de changement de vitesse, procurant au moins six rapports de transmission différents.

7. Transmission d'entraînement comprenant un train d'engrenages suivant l'une quelconque des revendications précédentes, caractérisée par un accouplement d'entrée d'entraînement mécanique à amortissement en torsion pour transmettre l'entraînement au train d'engrenages, lesdits moyens d'embrayage de marche avant (34, 36, 58) étant des ensembles d'embrayage imbriqués à plaques multiples, et l'agencement étant tel que le démarrage de l'entraînement à partir de l'arrêt est effectué par enclenchement progressif d'un desdits moyens d'embrayage, et des moyens de commande automatique ou semi-automatique sont prévus pour effectuer les changements de rapport de transmission par manoeuvre desdits moyens d'embrayage en fonction de paramètres de fonctionnement mesurés du train d'engrenages (10) ou de la transmission ou d'un véhicule (1) entraîné par cette transmission.

8. Transmission d'entraînement suivant la revendication 7, caractérisée en ce que lesdits moyens de commande pour lesdits moyens d'embrayage de marche avant (34, 36, 58) agissent de manière à effectuer l'engagement partiel d'au moins un desdits moyens d'embrayage, en plus des moyens d'embrayage engagés pour des fonctions de transmission d'entraînement à un instant donné, de sorte qu'on obtient un ralentissement du train d'engrenages.

9. Véhicule routier comprenant une transmission d'entraînement (3), caractérisé en ce que la transmisssion d'entraînement comprend un train d'engrenages (10) suivant l'une quelconque des revendications 1 à 6.

10. Véhicule routier, caractérisé par une transmission d'entraînement suivant la revendication 7 ou la revendication 8.

0  107  667

FIG.1

FIG.2

1

0 107 667

FIG.3

2

FIG.4

FIG.5

FIG.6

FIG.7